# FASCICULE DE BREVET EUROPEEN

(11) **EP 3 673 154 B1**
(45) Date de publication et mention de la délivrance du brevet: **10.08.2022**
(21) Numéro de dépôt: 18796712.0
(22) Date de dépôt: 02.10.2018
(51) Int. Cl.: F01D 17/10, F02C 7/14, F02C 7/18, F02C 9/18

(54) **CONDUIT DE DÉCHARGE D'UN MOYEU DE CARTER INTERMÉDIAIRE POUR TURBORÉACTEUR D'AÉRONEF COMPORTANT DES CANAUX DE REFROIDISSEMENT**
ABBLASKANAL EINER ZWISCHENGEHÄUSENABE FÜR EIN FLUGZEUGTURBOSTRAHLTRIEBWERK MIT KÜHLKANÄLEN
DISCHARGE DUCT OF AN INTERMEDIATE HOUSING HUB FOR AN AIRCRAFT TURBOJET ENGINE COMPRISING COOLING CHANNELS

(30) Priorité: 05.10.2017 FR 1759348
(43) Date de publication de la demande: 01.07.2020
(73) Titulaire: Safran Aircraft Engines, 75015 Paris (FR)
(72) Inventeur: BULOT, Benjamin, 77550 Moissy-Cramayel (FR); COJANDE, Pradeep, 77550 Moissy-Cramayel (FR); LEBEAULT, Eva Julie, 77550 Moissy-Cramayel (FR)
(74) Mandataire: Brevalex
(86) Numéro de dépôt international: PCT/FR2018/052425
(87) Numéro de publication internationale: WO 2019/069011

(56) Documents cités:
- EP-A1- 0 511 770
- WO-A1-2016/156739
- WO-A2-2010/136710
- US-A1- 2017 159 489

## Description

### DOMAINE TECHNIQUE

La présente invention se rapporte au domaine des turboréacteurs d'aéronef, et plus particulièrement au domaine général des turboréacteurs double corps et double flux.

L'invention concerne notamment le domaine du refroidissement des fluides nécessaire au bon fonctionnement des turboréacteurs. Elle concerne également le domaine des moyeux de carter intermédiaire pour turboréacteur d'aéronef, en particulier du type comprenant au moins deux corps mécaniquement indépendants.

Dans un turboréacteur à double corps, on désigne habituellement par « carter intermédiaire », un carter dont le moyeu est sensiblement agencé entre un carter de compresseur basse pression et un carter de compresseur haute pression.

La présente invention se rapporte plus particulièrement à un moyeu de carter intermédiaire du type comprenant des vannes de décharge (encore désignées par l'acronyme anglais VBV pour « Variable Bleed Valves »).

Les vannes de décharge sont destinées à réguler le débit en entrée du compresseur haute pression, afin notamment de limiter les risques de pompage du compresseur basse pression, en permettant l'évacuation d'une partie de l'air hors de l'espace annulaire d'écoulement du flux primaire. Ainsi, les conduits de décharge, ou conduits VBV, équipant les vannes de décharge, permettent de conduire la décharge de pression d'air du flux primaire au flux secondaire.

De plus, en cas de pénétration accidentelle dans cet espace d'écoulement, d'eau, notamment sous forme de pluie ou de grêle, ou encore de débris divers, qui sont susceptibles de nuire au fonctionnement du turboréacteur, les vannes de décharge permettent de récupérer cette eau ou ces débris qui sont centrifugés dans l'espace d'écoulement précité et de les éjecter vers l'extérieur de ce dernier.

Dans le cas des turboréacteurs à double flux, ces vannes de décharge sont ainsi configurées pour permettre le passage d'air, d'eau ou de débris de l'espace d'écoulement du flux primaire vers un espace annulaire d'écoulement d'un flux secondaire. Pour ce faire, les vannes de décharge comportent notamment des conduits de décharge du flux primaire vers le flux secondaire raccordant des orifices communiquant respectivement avec le flux primaire et le flux secondaire.

Ainsi, de façon plus précise, l'invention concerne un conduit de décharge d'un moyeu de carter intermédiaire pour turboréacteur d'aéronef comportant une grille d'éjection pourvue d'ailettes avec canaux de circulation d'un fluide à refroidir, un moyeu de carter intermédiaire comportant un tel conduit de décharge, un carter intermédiaire comportant un tel moyeu, ainsi qu'un turboréacteur d'aéronef comportant un tel carter intermédiaire.

### ÉTAT DE LA TECHNIQUE

Le refroidissement des fluides dans un turboréacteur est un enjeu majeur pour leur bon fonctionnement. Cette problématique devient encore plus critique lorsque le turboréacteur est équipé d'un boîtier d'entraînement des accessoires, mieux connu sous sa dénomination anglaise « Accessory Gear Box (AGB) », qui nécessite une capacité d'extraction thermique plus importante.

Ainsi, le refroidissement peut être réalisé par le biais d'un échangeur thermique surfacique air/huile du type SACOC (acronyme de la dénomination anglaise « Surface Air-Cooled Oil Cooler ») situé en aval des aubes de guidage de sortie ou encore aubes OGV pour « Outlet Guide Vanes » en anglais sur la partie extérieure de la veine aérodynamique. Un tel échangeur de type SACOC comprend des ailettes permettant d'augmenter les surfaces d'échange thermique entre le flux secondaire venant de la soufflante et le fluide à refroidir.

Toutefois, l'ajout d'ailettes de refroidissement immergées dans le flux entraîne une augmentation des pertes aérodynamiques impactant directement la poussée aérodynamique et la consommation du turboréacteur. Le dimensionnement de ces ailettes est réalisé de façon à permettre en tout point du cycle du turboréacteur le refroidissement du fluide. Or, on constate que le dimensionnement est principalement fait par les points à bas régime où la surface des ailettes est importante pour compenser un débit d'air faible dans la veine aérodynamique.

En conséquence, il existe un besoin pour proposer une solution alternative de refroidissement des fluides dans un turboréacteur, et notamment en substitution ou en complément d'un échangeur thermique surfacique air/huile du type SACOC. Un moyeu de carter intermédiaire pour turboréacteur selon l'art antérieur est divulgué dans le document WO2016156739.

### EXPOSÉ DE L'INVENTION

L'invention a pour but de remédier au moins partiellement aux besoins mentionnés ci-dessus et aux inconvénients relatifs aux réalisations de l'art antérieur.

L'invention a ainsi pour objet un moyeu de carter intermédiaire pour turboréacteur tel que défini dans la revendication 1.

Grâce à l'invention, il peut être possible de garantir un refroidissement efficace en tout point du cycle moteur tout en limitant l'impact de cette solution sur les pertes aérodynamiques sur les points de performances. De plus, la solution de l'invention permet avantageusement de combiner deux fonctions, à savoir redresser et refroidir, sur une seule et unique pièce. L'invention présente également l'avantage d'être adaptée au point à faible régime où les grilles des conduits de décharge VBV sont actives, à savoir ouvertes, donc avec de l'air provenant du compresseur basse pression circulant dans les conduits de décharge et évacué dans le flux secondaire.

Le conduit de décharge selon l'invention peut en outre comporter l'une ou plusieurs des caractéristiques suivantes.

Les canaux de circulation peuvent notamment s'étendre à l'intérieur des ailettes de façon sensiblement parallèle entre eux.

Le nombre et la section des canaux de circulation peuvent être variables, étant notamment liés directement au besoin en échange thermique et devant ainsi être adaptés.

Par exemple, les canaux de circulation peuvent présenter, en section, une forme circulaire. En variante, les canaux de circulation peuvent présenter, en section, une forme en étoile.

Les canaux de circulation peuvent être obtenus par perçage dans les ailettes. En variante, pour plus de facilité, les ailettes, et donc les canaux de circulation, peuvent être obtenues par une méthode de fabrication additive.

En outre, le moyeu de carter intermédiaire peut comporter au moins une vanne de décharge, comprenant au moins une porte mobile apte à prélever, depuis ledit au moins un orifice primaire, de l'air circulant dans l'espace d'écoulement primaire et à renvoyer vers ladite au moins une zone inter veines l'air ainsi prélevé en direction du conduit de décharge, situé dans ladite au moins une zone inter veines et conformé pour assurer un passage d'air depuis ledit au moins un orifice d'entrée de décharge vers ledit au moins un orifice de sortie secondaire pour renvoyer l'air prélevé via ladite au moins une vanne de décharge dans l'espace d'écoulement secondaire.

De plus, l'invention a également pour objet, selon un autre de ses aspects, un carter intermédiaire pour turboréacteur d'aéronef, caractérisé en ce qu'il comporte un moyeu tel que défini précédemment.

En outre, l'invention a encore pour objet, selon un autre de ses aspects, un turboréacteur d'aéronef, caractérisé en ce qu'il comporte un carter intermédiaire tel que défini précédemment.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 représente, en coupe axiale, un exemple de moyeu d'un carter intermédiaire pour un turboréacteur d'aéronef,
- la figure 2 illustre, en coupe axiale schématique et partielle, un principe de fixation d'un conduit de décharge à la virole externe d'un moyeu de carter intermédiaire de turboréacteur d'aéronef, c'est-à-dire la réalisation de l'interface entre le conduit de décharge et la virole externe du moyeu, comprenant une grille d'éjection,
- la figure 3 illustre, selon une vue partielle en perspective et en coupe, un exemple de conduit de décharge de moyeu de carter intermédiaire de turboréacteur d'aéronef conforme à l'invention, comportant une grille d'éjection avec des ailettes pourvues de canaux de circulation d'un fluide à refroidir,
- la figure 4 illustre, selon une vue partielle en perspective agrandie, un détail de réalisation des canaux de circulation de la figure 3,
- la figure 5 illustre, selon une vue partielle en perspective, une variante de réalisation des canaux de circulation de la figure 3, et
- la figure 6 illustre, en coupe radiale schématique et partielle, la grille de la figure 2 pour son raccordement à un circuit d'huile.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Dans toute la description, il est noté que les termes amont et aval sont à considérer par rapport à une direction principale F d'écoulement normal des gaz (de l'amont vers l'aval) pour un turboréacteur 12. Par ailleurs, on appelle axe T du turboréacteur 12, l'axe de symétrie radiale du turboréacteur 12. La direction axiale du turboréacteur 12 correspond à l'axe de rotation du turboréacteur 12, qui est la direction de l'axe T du turboréacteur 12. Une direction radiale du turboréacteur 12 est une direction perpendiculaire à l'axe T du turboréacteur 12. En outre, sauf précision contraire, les adjectifs et adverbes axial, radial, axialement et radialement sont utilisés en référence aux directions axiale et radiale précitées. De plus, sauf précision contraire, les termes intérieur (ou interne) et extérieur (ou externe) sont utilisés en référence à une direction radiale de sorte que la partie intérieure d'un élément est plus proche de l'axe T du turboréacteur 12 que la partie extérieure du même élément.

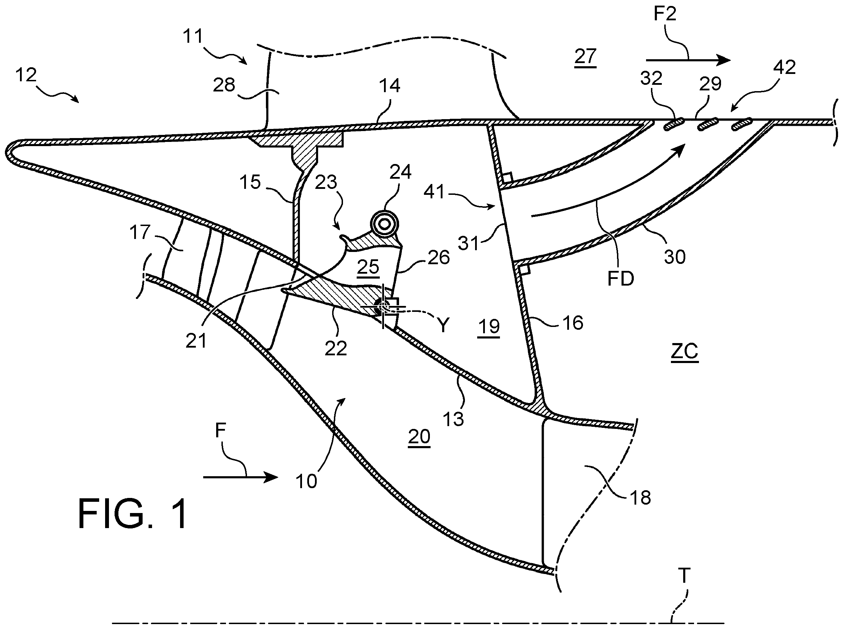

Les figures 1 et 2 permettent d'illustrer le contexte technique de l'invention tel qu'aussi décrit par exemple dans la demande de brevet français FR 3 036 136 A1 de la Demanderesse.

Ainsi, la figure 1 représente partiellement, en coupe axiale, un exemple de moyeu 10 d'un carter intermédiaire 11 pour un turboréacteur 12 d'aéronef à double corps et double flux d'un type connu.

Le moyeu 10 du carter intermédiaire 11 comporte habituellement deux viroles annulaires coaxiales, respectivement interne 13 et externe 14, reliées mutuellement par deux flasques transversaux, à savoir un flasque transversal amont 15 et un flasque transversal aval 16.

Le flasque transversal amont 15 est agencé en aval d'un compresseur basse pression 17 du turboréacteur 12, tandis que le flasque transversal aval 16 est agencé en amont d'un compresseur haute pression 18 de ce turboréacteur 12. Ce compresseur haute pression 18 comprend généralement une succession de rotors et de stators à calage variable, permettant de contrôler le débit de l'air le traversant.

Par ailleurs, entre les viroles interne 13 et externe 14, et entre les flasques transversaux amont 15 et aval 16, sont ménagés des espaces intermédiaires 19 répartis autour de l'axe du moyeu 10, confondu avec l'axe de rotation T du turboréacteur 12. Les espaces intermédiaires 19 sont à l'amont d'une zone inter veines ZC.

De plus, la virole interne 13 délimite un espace annulaire d'écoulement primaire 20 d'un flux primaire du turboréacteur 12. Par ailleurs, la virole interne 13 comporte des orifices de passage d'air 21, appelés orifices primaires dans ce qui suit, dont chacun est obturé par le clapet pivotant 22 d'une vanne de décharge 23 correspondante, destinée à la régulation du débit du compresseur haute pression 18, et le cas échéant, à l'évacuation d'air, d'eau ou de débris comme expliqué auparavant.

Une telle vanne de décharge 23 prend habituellement la forme d'une porte 24, qui comporte le clapet pivotant 22 à son extrémité radialement interne et qui est montée pivotante autour d'un axe Y de sorte qu'en position de fermeture des orifices primaires 21, le clapet 22 prolonge la virole interne 13 du carter intermédiaire 11 de manière sensiblement continue pour réduire au mieux les risques de perturbations aérodynamiques du flux primaire par ce clapet 22, et qu'en position d'ouverture desdits orifices primaires 21, le clapet 22 fasse saillie radialement vers l'intérieur par rapport à la virole interne 13 et forme ainsi une écope de prélèvement d'une partie du flux primaire dans l'espace 20. La porte 24 comporte une conduite 25 par laquelle de l'air écope transite, cette conduite 25 se terminant en aval sur un orifice de sortie 26 débouchant dans l'espace intermédiaire correspondant 19. La demande de brevet français FR 2 961 251 A1 de la Demanderesse décrit encore un autre exemple de vanne de décharge d'un moyeu de carter intermédiaire de turboréacteur d'aéronef.

Par ailleurs, la virole externe 14 délimite un espace annulaire d'écoulement secondaire 27 d'un flux secondaire F2 du turboréacteur 12, et est raccordée à des bras structuraux 28, relativement écartés les uns des autres, traversant cet espace 27. De plus, la virole externe 14 comporte des orifices de passage d'air 29, appelés orifices secondaires dans ce qui suit, et agencés en aval du flasque transversal aval 16. Autrement dit, dans cet exemple de la figure 1, l'évacuation de l'air, de l'eau ou des débris se fait au travers de la virole externe 14.

Toutefois, en variante (non représentée), lorsque par exemple la virole externe 14 porte des aubes directrices relativement proches les unes des autres, celles-ci gênent l'évacuation précitée au travers de la virole externe 14. Dans ce cas, il peut être souhaitable de permettre cette évacuation plus en aval, au travers de la paroi annulaire d'une extension du moyeu du carter intermédiaire, c'est-à-dire la paroi annulaire d'une pièce structurale qui est parfois utilisée pour supporter à son extrémité aval des éléments d'inverseurs de poussée tels que des panneaux de carénage.

Lorsque les stators à calage variable du compresseur haute pression 18 sont dans une position réduisant le débit d'air entrant dans ce compresseur, un surplus d'air dans l'espace d'écoulement secondaire peut alors être évacué par les orifices secondaires 29, évitant ainsi des phénomènes de pompage pouvant conduire à une détérioration, voire une destruction complète, du compresseur basse pression 17.

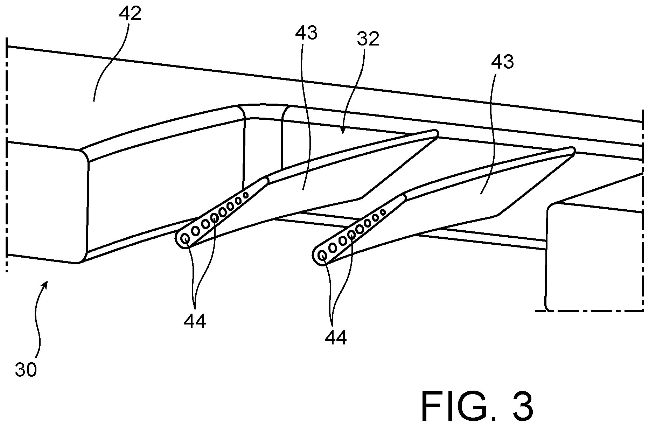

En outre, comme expliqué précédemment, des conduits de décharge 30 s'étendent chacun entre un orifice d'entrée 31 respectif débouchant dans l'espace intermédiaire 19 et un orifice de sortie secondaire 29 correspondant. L'orifice d'entrée 31 est aménagé à une extrémité d'entrée 41 du conduit 30 à son raccordement avec le flasque transversal aval 16. A l'intérieur de ces conduits de décharge 30 circule un flux de décharge FD, issu du flux primaire, en direction du flux secondaire F2. L'orifice d'entrée 31 est généralement agencé au ras de la surface du flasque transversal aval 16 donnant sur l'espace intermédiaire 19. L'orifice de sortie secondaire 29 comporte quant à lui une grille de contrôle 32, fixée au conduit de décharge 30 à sa sortie, pour pouvoir contrôler le flux de décharge FD lors de son rejet dans le flux secondaire F2. L'orifice secondaire 29 est aménagé à une extrémité de sortie 42 (figure 3) du conduit 30 à son raccordement avec la virole externe 14.

Dans chaque espace intermédiaire 19, l'orifice de sortie 26 de la conduite 25 et l'orifice d'entrée 31 du conduit de décharge 30 sont agencés en vis-à-vis.

Chaque porte 24, l'espace intermédiaire 19 et le conduit de décharge 30 en aval correspondants forment ainsi ensemble un système d'évacuation d'air, d'eau ou de débris, désigné globalement par l'expression « vanne de décharge », depuis l'espace d'écoulement primaire 20 vers l'espace d'écoulement secondaire 27. Le moyeu 11 comporte donc une pluralité de tels systèmes répartis autour de son axe T.

Lorsqu'une porte 24 est en position ouverte, un flux d'air écopé par celle-ci traverse le conduit primaire 25, débouche dans l'espace intermédiaire 19 par son orifice de sortie 26, pénètre dans le conduit de décharge 30 correspondant jusqu'à atteindre l'espace d'écoulement secondaire 27.

Par ailleurs, la figure 2 représente, en coupe axiale schématique et partielle, un principe de fixation d'un conduit de décharge 30 à la virole externe 14 d'un moyeu 10 de carter intermédiaire 11 de turboréacteur d'aéronef 12, autrement dit la réalisation de l'interface entre le conduit de décharge 30 et la virole externe 14 du moyeu 10.

Ainsi, le conduit de décharge 30 est fixé à la virole annulaire externe 14 au niveau de l'orifice de sortie secondaire 29 et un joint d'étanchéité 33 à l'air et au feu, réalisé par exemple en silicone, est disposé entre le conduit de décharge 30 et la virole annulaire externe 14. Plus précisément, la virole externe 14 comporte un bossage annulaire 37 et le conduit de décharge 30 comporte un soyage annulaire 36. La fixation du conduit de décharge 30 à la virole externe 14 est alors réalisée par l'intermédiaire de moyens de vissage 34 passant au travers du bossage annulaire 37 et du soyage annulaire 36. De plus, l'ensemble formé par le bossage annulaire 37 et le soyage annulaire 36 s'étend tout autour du joint d'étanchéité 33, formant une séparation entre le joint d'étanchéité 33 et la zone inter veines ZC.

Par ailleurs, une grille d'éjection 32, ou grille de contrôle, est disposée au niveau de l'orifice de sortie secondaire 29. Cette grille d'éjection 32 comporte une pluralité d'ailettes 43 permettant de guider le fluide provenant du compresseur basse pression vers le flux secondaire. Le joint d'étanchéité 33 est alors disposé tout autour de la grille d'éjection 32, laquelle est fixée au conduit de décharge 30 par le biais de moyens de vissage 35. Ainsi, le joint d'étanchéité 33 est situé entre la grille d'éjection 32 et l'ensemble formé par le bossage annulaire 37 et le soyage annulaire 36.

De façon avantageuse, la solution de l'invention, visible sur les figures 3 à 5, utilise les ailettes 43 de la grille d'éjection 32 pour former un échangeur thermique apte à refroidir un fluide donné.

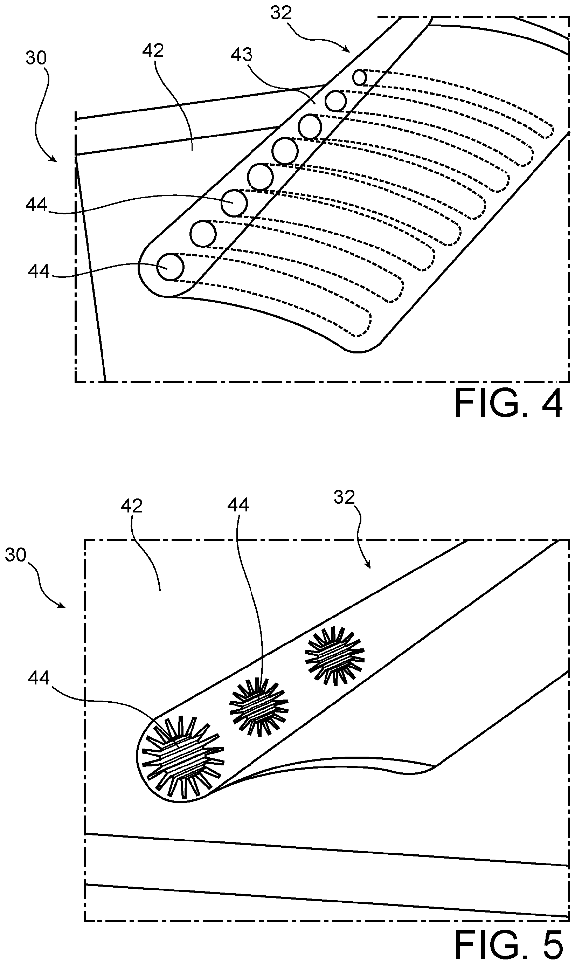

Ainsi, la figure 3 illustre, selon une vue partielle en perspective, un exemple de conduit de décharge 30 conforme à l'invention, comportant une grille d'éjection 32 avec des ailettes 43 pourvues de canaux de circulation 44 d'un fluide à refroidir. La figure 4 illustre, selon une vue partielle en perspective agrandie, un détail de réalisation des canaux de circulation 44 de la figure 3, et la figure 5 illustre, selon une vue partielle en perspective, une variante de réalisation des canaux de circulation 44 de la figure 3.

De façon avantageuse, les ailettes 43 sont modifiées, par exemple par perçage ou par fabrication additive, de sorte à obtenir de multiples canaux de circulation 44 d'un fluide à refroidir et à former un système d'échange thermique. L'échange thermique se fait alors par l'intermédiaire du volume des ailettes 43 pouvant être modifiées pour offrir la plus grande surface d'échange thermique possible.

En référence aux figures 3 et 4, les canaux de circulation 44 des ailettes 43 peuvent présenter, en section, une forme circulaire et peuvent également s'étendre à l'intérieur des ailettes 43 de façon sensiblement parallèle entre eux, comme visible sur la figure 4.

Sur la figure 5, les canaux de circulation 44 présentent, en section, une forme en étoile. En effet, cette solution peut être envisagée afin de maximiser les surfaces d'échange thermique.

Il est à noter que le moyeu 10 de carter intermédiaire 11 selon l'invention, associé au conduit de décharge 30 des figures 3 à 5 décrites auparavant, peut notamment être du même type que celui décrit en référence aux figures 1 et 2. Aussi, pour les parties non représentées sur les figures 3 à 5, il convient de se référer à la description précédente des figures 1 et 2.

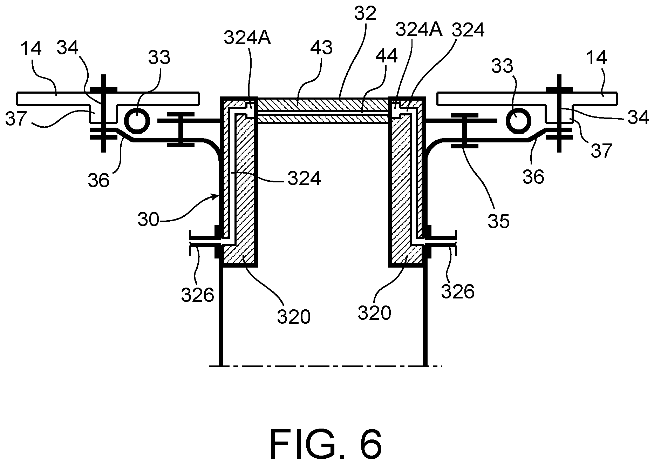

Par ailleurs, les canaux de circulation 44 sont reliés à un circuit d'huile de type de celui existant pour alimenter habituellement des échangeurs. La figure 6 est schématique, en coupe prise radialement à l'axe de rotation du moteur au travers de l'une des ailettes 43 en montrant l'un de ses canaux 44. La périphérie latérale de la grille est raccordée à emmanchement aux bords longitudinaux du conduit de décharge 30, via des manches latérales 320. Les extrémités des ailettes 32 ont leurs canaux de circulation 44 débouchant à étanchéité par des moyens de type connus à des canalisations 324 aménagées dans les manches 320 de la grille 32. Ces canalisations 324 ont à leurs extrémités côté ailette, à chaque bordure latérale de la grille, une section collectrice 324A dans laquelle les canaux 44 débouchent. A l'opposé, les canalisations 324 sont raccordées via des étanchéités par moyen de type connus à des tuyaux 326 reliés à un circuit d'huile du moteur, qui ne nécessite pas d'être décrit.

Bien entendu, l'invention n'est pas limitée aux exemples de réalisation qui viennent d'être décrits. Diverses modifications peuvent y être apportées par l'homme du métier.

## Revendications

1. Moyeu (10) de carter intermédiaire (11) pour turboréacteur (12) d'aéronef, comportant un conduit de décharge (30), comportant une extrémité d'entrée (41) et une extrémité de sortie (42), destinées à assurer le passage d'air depuis au moins un orifice d'entrée de décharge (31) vers au moins un orifice de sortie secondaire (29), et comportant une grille d'éjection (32) disposée au niveau de l'extrémité de sortie (42), ladite grille d'éjection (32) comportant une pluralité d'ailettes (43), le moyeu comportant en outre :
- une virole annulaire interne (13) destinée à délimiter d'une part intérieurement un espace d'écoulement primaire (20) d'un flux de gaz primaire dans le turboréacteur (12), et d'autre part extérieurement l'amont d'au moins une zone inter veines (ZC), la virole annulaire interne (13) étant pourvue d'au moins un orifice primaire de passage d'air (21),
- une virole annulaire externe (14) destinée à délimiter d'une part extérieurement un espace d'écoulement secondaire (27) d'un flux de gaz secondaire (F2) dans le turboréacteur (12), et d'autre part intérieurement ladite au moins une zone inter veines (ZC), la virole annulaire externe (14) étant pourvue dudit au moins un orifice de sortie secondaire de passage d'air (29),
- un flasque transversal aval (16), reliant les viroles annulaires interne (13) et externe (14), délimitant en amont au moins un espace intermédiaire (19) et en aval ladite au moins une zone inter veines (ZC), le flasque transversal aval (16) comprenant ledit au moins un orifice d'entrée de décharge (31),
**caractérisé en ce que** les ailettes (43) comportent des canaux de circulation (44) d'un fluide à refroidir de sorte à former un système d'échange thermique.

2. Moyeu de carter intermédiaire selon la revendication 1, **caractérisé en ce que** les canaux de circulation (44) s'étendent à l'intérieur des ailettes (43) de façon sensiblement parallèle entre eux.

3. Moyeu de carter intermédiaire selon la revendication 1 ou 2, **caractérisé en ce que** les canaux de circulation (44) présentent, en section, une forme circulaire.

4. Moyeu de carter intermédiaire selon la revendication 1 ou 2, **caractérisé en ce que** les canaux de circulation (44) présentent, en section, une forme en étoile.

5. Moyeu de carter intermédiaire selon l'une des revendications 1 à 4, **caractérisé en ce que** les ailettes sont obtenues par une méthode de fabrication additive.

6. Moyeu de carter intermédiaire selon l'une quelconque des revendications précédentes, **caractérisé en ce qu'**il comporte en outre :
- au moins une vanne de décharge (23), comprenant au moins une porte mobile (24) apte à prélever, depuis ledit au moins un orifice primaire (21), de l'air circulant dans l'espace d'écoulement primaire (20) et à renvoyer vers ladite au moins une zone inter veines (ZC) l'air ainsi prélevé en direction du conduit de décharge (30), situé dans ladite au moins une zone inter veines (ZC) et conformé pour assurer un passage d'air depuis ledit au moins un orifice d'entrée de décharge (31) vers ledit au moins un orifice de sortie secondaire (29) pour renvoyer l'air prélevé via ladite au moins une vanne de décharge (23) dans l'espace d'écoulement secondaire (27).

7. Carter intermédiaire (11) pour turboréacteur d'aéronef (12), **caractérisé en ce qu'**il comporte un moyeu (10) selon l'une quelconque des revendications précédentes.

8. Turboréacteur d'aéronef (12), **caractérisé en ce qu'**il comporte un carter intermédiaire (11) selon la revendication 7.

## Patentansprüche

1. Nabe (10) für ein Zwischengehäuse (11) eines Turbostrahltriebwerks (12) eines Flugzeugs, das eine Auslassleitung (30) umfasst, die ein Eintrittsende (41) und ein Austrittsende (42) umfasst, welche dazu bestimmt sind, den Durchtritt von Luft von mindestens einer Auslasseintrittsöffnung (31) zu mindestens einer sekundären Austrittsöffnung (29) sicherzustellen, und die ein Ausstoßgitter (32) umfasst, das im Bereich des Austrittsendes (42) angeordnet ist, wobei das Ausstoßgitter (32) eine Vielzahl von Schaufeln (43) umfasst, wobei die Nabe weiter umfasst:
- einen ringförmigen Innenmantel (13), der dazu bestimmt ist, einerseits innen einen primären Strömungsraum (20) eines primären Gasstroms im Turbostrahltriebwerk (12), und andererseits außen die Anströmseite mindestens einer zwischen Leiträdern liegenden Zone (ZC) zu begrenzen, wobei der ringförmige Innenmantel (13) mit mindestens einer primären Luftdurchtrittsöffnung (21) versehen ist,
- einen ringförmigen Außenmantel (14), der dazu bestimmt ist, einerseits außen einen sekundären Strömungsraum (27) eines sekundären Gasstroms (F2) im Turbostrahltriebwerk (12), und andererseits innen die mindestens eine zwischen Leiträdern liegende Zone (ZC) zu begrenzen, wobei der ringförmige Außenmantel (14) mit der mindestens einen sekundären Luftdurchtritt-Austrittsöffnung (29) versehen ist,
- einen abströmseitigen querverlaufenden Flansch (16), der den ringförmigen Innen- (13) und Außenmantel (14) miteinander verbindet und anströmseitig mindestens einen Zwischenraum (19), und abströmseitig die mindestens eine zwischen Leiträdern liegende Zone (ZC) begrenzt, wobei der abströmseitige querverlaufende Flansch (16) die mindestens eine Auslasseintrittsöffnung (31) umfasst,
**dadurch gekennzeichnet, dass** die Schaufeln (43) Zirkulationskanäle (44) für ein zu kühlendes Fluid umfassen, sodass sie ein Wärmeaustauschsystem bilden.

2. Nabe für ein Zwischengehäuse nach Anspruch 1, **dadurch gekennzeichnet, dass** sich die Zirkulationskanäle (44) im Inneren der Schaufeln (43) im Wesentlichen parallel zueinander erstrecken.

3. Nabe für ein Zwischengehäuse nach Anspruch 1 oder 2, **dadurch gekennzeichnet, dass** die Zirkulationskanäle (44) im Querschnitt eine Kreisform aufweisen.

4. Nabe für ein Zwischengehäuse nach Anspruch 1 oder 2, **dadurch gekennzeichnet, dass** die Zirkulationskanäle (44) im Querschnitt eine Sternform aufweisen.

5. Nabe für ein Zwischengehäuse nach einem der Ansprüche 1 bis 4, **dadurch gekennzeichnet, dass** die Schaufeln durch ein additives Fertigungsverfahren erhalten werden.

6. Nabe für ein Zwischengehäuse nach einem der vorstehenden Ansprüche, **dadurch gekennzeichnet, dass** sie weiter umfasst:
- mindestens ein Auslassventil (23), das mindestens eine bewegliche Klappe (24) umfasst, die von der mindestens einen primären Öffnung (21) im primären Strömungsraum (20) zirkulierende Luft entnehmen und die so entnommene Luft zu der mindestens einen zwischen Leiträdern liegenden Zone (ZC) in Richtung der Auslassleitung (30) zurückleiten kann, welche sich in der mindestens einen zwischen Leiträdern liegenden Zone (ZC) befindet und so ausgebildet ist, dass sie einen Durchtritt von Luft von der mindestens einen Auslasseintrittsöffnung (31) zu der mindestens einen sekundären Austrittsöffnung (29) sicherstellt, um die entnommene Luft über das mindestens eine Auslassventil (23) in den sekundären Strömungsraum (27) zurückzuleiten.

7. Zwischengehäuse (11) für ein Turbostrahltriebwerk (12) eines Flugzeugs, **dadurch gekennzeichnet, dass** es eine Nabe (10) nach einem der vorstehenden Ansprüche umfasst.

8. Turbostrahltriebwerk (12) für ein Flugzeug, **dadurch gekennzeichnet, dass** es ein Zwischengehäuse (11) nach Anspruch 7 umfasst.

## Claims

1. Hub (10) of an intermediate housing (11) for an aircraft jet engine (12), comprising a discharge duct (30), comprising an inlet end (41) and an outlet end (42), intended to provide the passage of air from at least one discharge inlet orifice (31) to at least one secondary outlet orifice (29), and comprising an ejection grille (32) disposed at the location of the outlet end (42), said ejection grille (32) comprising a plurality of fins (43), the hub further comprising:
- an inner annular ferrule (13) intended to delimit, on one hand, internally a primary flow space (20) of a primary gas flow in the jet engine (12), and, on the other, externally, the upstream section of at least one inter-jet zone (ZC), the inner annular ferrule (13) being provided with at least one primary air passage orifice (21),
- an outer annular ferrule (14) intended to delimit, externally, a secondary flow space (27) of a secondary gas flow (F2) in the jet engine (12), and furthermore to delimit, internally, said at least one inter-jet zone (ZC), the outer annular ferrule (14) being provided with said at least one secondary air passage outlet orifice (29),
- a downstream cross flange (16), connecting the inner (13) and outer (14) annular ferrules, delimiting upstream at least one intermediate space (19) and downstream said at least one inter-jet zone (ZC), the downstream cross flange (16) comprising said at least one discharge inlet orifice (31),
**characterised in that** the fins (43) comprise channels (44) for circulating a fluid to be cooled so as to form a heat exchange system.

2. Intermediate housing hub according to claim 1, **characterised in that** the circulation channels (44) extend inside the fins (43) substantially parallel with one another.

3. Intermediate housing hub according to claim 1 or 2, **characterised in that** the circulation channels (44) have, as a cross-section, a circular shape.

4. Intermediate housing hub according to claim 1 or 2, **characterised in that** the circulation channels (44) have, as a cross-section, a star shape.

5. Intermediate housing hub according to one of claims 1 to 4, **characterised in that** the fins are obtained by an additive manufacturing method.

6. Intermediate housing hub according to any one of the preceding claims, **characterised in that** it further comprises:
- at least one discharge valve (23), comprising at least one movable gate (24) suitable for extracting, from said at least one primary orifice (21), air circulating in the primary flow space (20) and for returning to said at least one inter-jet zone (ZC) the air so extracted towards the discharge duct (30), situated in said at least one inter-jet zone (ZC) and formed to provide an air passage from said at least one discharge inlet orifice (31) to said at least one secondary outlet orifice (29) to return the extracted air via said at least one discharge valve (23) into the secondary flow space (27).

7. Intermediate housing (11) for an aircraft jet engine (12), **characterised in that** it comprises a hub (10) according to any one of the preceding claims.

8. Aircraft jet engine (12), **characterised in that** it comprises an intermediate housing (11) according to claim 7.
